# NEW EUROPEAN PATENT SPECIFICATION

(11) **EP 2 182 795 B2**
(45) Date of publication and mention of the opposition decision: **30.05.2018**
(45) Mention of the grant of the patent: 09.02.2011
(21) Application number: 08828469.0
(22) Date of filing: 27.08.2008
(51) Int. Cl.: A01K 5/00, A01D 43/08, A01F 29/00, A23K 1/00, B01F 15/00, B02C 18/00, B02C 23/08, B02C 25/00, G05D 5/04

(54) **SYSTEM AND METHOD FOR MIXING ANIMAL FEED**
SYSTEM UND VERFAHREN ZUM MISCHEN VON TIERFUTTER
SYSTÈME ET PROCÉDÉ POUR MÉLANGER UN ALIMENT POUR ANIMAUX

(30) Priority: 30.08.2007 SE 0701954
(43) Date of publication of application: 12.05.2010
(73) Proprietor: DeLaval Holding AB, 147 21 Tumba (SE)
(72) Inventor: MAZERIS, Fernando, S-120 62 Stockholm (SE); DE VILLIERS, Pierre, Hillcrest 3216, N3 (NZ)
(74) Representative: Lilliehorn, Tobias
(86) International application number: PCT/SE2008/050971
(87) International publication number: WO 2009/029038

(56) References cited:
- EP-A- 1 360 891
- EP-A- 1 671 530
- GB-A- 2 310 793
- US-A- 5 082 188

## Description

### TECHNICAL FIELD OF THE INVENTION

The present invention generally relates to farming, and more specifically the invention relates to a system and to a method, respectively, for mixing animal feed on a farm.

### DESCRIPTION OF RELATED ART AND BACKGROUND OF THE INVENTION

Feed costs comprise 40-50% of the cost of milk production. Implementation and management of feeding systems to sustain high levels of milk production and control feed costs are crucial to the profitability of expanding dairies. Considerations regarding nutritional demands of the herd, ration management (including analysis of the feed, cost and availability), feed preparation and transport, feed distribution and consumption control have to be made.

Attempts have been made to increase the efficiency of feed utilization and milk production by using various formulations and feed supplements. In particular, the particle size distribution of the feed is an important part of ration formulation. Until recently, particle size has been difficult to measure on the farm.

Document EP-A- 1 671 530 discloses a harvester for cutting harvested crops with a crop particle size measurement device that controls the chopper means.

The New Penn State Forage Particle Separator provides a tool to quantitatively determine the particle size of forages and total mixed rations (TMRs), see e.g. the document DAS 02-42, Evaluating particle size of forages and TMRs using the New Penn State Forage Particle Separator, J. Heinrichs and P. Kononoff, College of Agricultural Sciences, Pennsylvania State University, which was available at the website www.das.psu.edu in April 2007. The separator comprises four plastic separator boxes, which are placed on top of each other. Three of the boxes contain differently sized holes. The sieve with the largest holes is placed on top, the sieve with the medium-sized holes is placed next, the sieve with the smallest holes is placed there under, and the solid pan is placed on the bottom.

The particle size measurement is performed entirely manually by placing about three pints of forage or TMR on the uppermost sieve. The separator is then shaken horizontally according to a given scheme, after which the material on each of the sieves and on the bottom pan is collected and weighed. The particle size results are plotted as a straight line distribution on lognormal graphing paper.

### SUMMARY OF THE INVENTION

Measuring particle size by the above separator is labor intense, cumbersome and costly. Further, the measuring method is very slow and cannot be performed very often. Therefore, the method may have limited use on larger farms, where a large number of animals are fed group wise with TMR feed having different feed mixtures.

Similarly, the method may not be very practical if the feed constituents are changed frequently since the measurement has typically to be performed each time a new ingredient is used in the TMR and the slowness of the method will slow down the feed mixing and in turn the feeding.

The feeding costs will increase, the quantity and/or quality in milk production will decrease, and/or the animal health will be deteriorated.

Yet further, the separator cannot be used if the feed is wet. If the moisture content is above 55 % the samples will not separate accurately.

It is an object of the present invention to provide a system and a method, respectively, for managing animals on a dairy farm, which can solve or at lest alleviate at least some of the problems associated with the prior art.

It is a particular object of the invention to provide such a system and such a method, which can reduce the feeding costs and increase the quantity and/or quality in milk production simultaneously as the animal health is improved.

It is a further object of the invention to provide such a system and such a method, which can reduce problems related to feeding and metabolic diseases such as e.g. ketosis, acidosis and displaced abomasum.

It is yet a further object of the invention to provide such a system and such a method, which can be fully automated, and which can be coupled to a computer-based managing and control device for overall management of the animals on the farm.

It is still a further object to provide such a system and such a method, which are efficient, accurate, precise, flexible, fast, uncomplicated, reliable, of reasonable cost, and/or easy to implement and use.

These objects, among others, are according to the present invention attained by systems and methods as specified in the appended claims.

According to one aspect of the invention there is provided a system as defined in claim 1.

The mixing time the feed mixer cuts and mixes the animal feed is based on the measured size of feed particles in the animal feed.

By such a system a fully automated mixing system is obtained, by which cutting and mixing can be controlled in real time or near real time. Appropriate particle size can be fed to the animals, which improves animal health and increases milk production.

A feeding device, particularly a feed wagon, provided for feeding animals with the animal feed is integrated with the feed mixing system.

According to another aspect of the invention there is provided a method for mixing animal feed according to the method of claim 9.

The method is preferably performed on a regular basis, e.g. each time the feed mixer cuts and mixes animal feed.

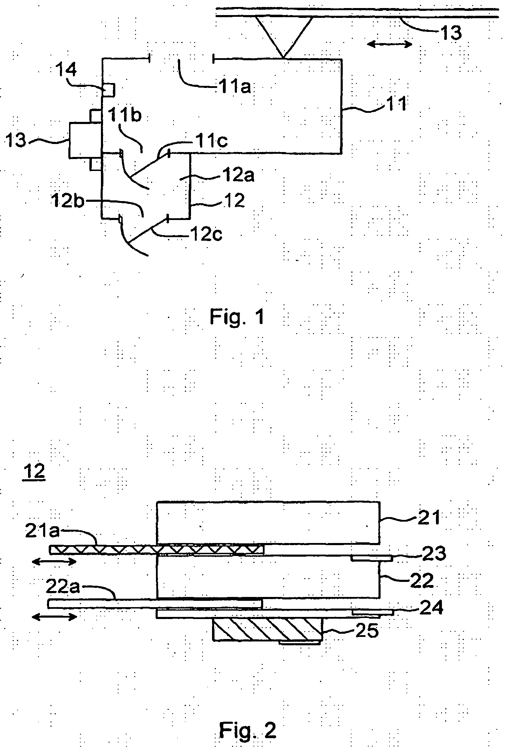

Further characteristics of the invention and advantages thereof, will be evident from the following detailed description of preferred embodiments of the present invention given hereinafter and the accompanying Figs. 1-4, which are given by way of illustration only and thus, are not limitative of the present invention.

### BRIEF DESCRIPTION OF THE DRAWINGS

Fig. 1 displays schematically in a block diagram a system for mixing animal feed according to an embodiment of the present invention.
Fig. 2 displays schematically a feed particle size measurement device as being comprised in a system for mixing animal feed.
Fig. 3 displays schematically a feed particle size measurement device as being comprised in a system for mixing animal feed according to the invention.
Fig. 4 displays schematically in a block diagram a system for mixing animal feed according to a still further embodiment of the invention.

### DETAILED DESCRIPTION OF EMBODIMENTS

A system for mixing animal feed is schematically illustrated in Fig. 1, the system comprising a feed mixer 11, a feed particle size measurement device 12, and a control device 13.

The feed mixer 11 can be any kind of feed mixer provided for cutting and mixing animal feed. Examples of feed mixers that can be used in the present invention comprise e.g. DeLaval vertical mixer VM and DeLaval horizontal mixer HM. The feed mixer 11 has an input opening 11a at a top thereof and an output opening 11b at a bottom thereof. The output opening 11b is provided with an automatically controllable door, gate, or shutter 11c.

The feed particle size measurement device 12 is provided for measuring the size of feed particles in the animal feed in connection with the mixing of the animal feed. Typically, the feed particle size measurement device 12 is integrated with the feed mixer 11 to form an integrated apparatus. Preferably, the feed particle size measurement device 12 comprises an enclosed chamber 12a arranged at the bottom of the feed mixer 11 so that a sample of cut and mixed animal feed can be output through the output opening 11b of the feed mixer 11 and collected in the chamber 12a of the feed particle size measurement device 12. To this end, the chamber 12a is open in a top end thereof. The feed particle size measurement device 12 comprises further means (not explicitly illustrated in Fig. 1) for automatically determining feed particle size of the animal feed collected in the chamber 12a. An output opening 12b of the feed particle size measurement device 12 is likewise provided with an automatically controllable door, gate, or shutter 12c.

The control device 13 is operatively connected to both the feed mixer 11 and the feed particle size measurement device 12. The control device 13 may be provided for the following actions:
- controlling the operation of the feed mixer 11;
- controlling the operation of the feed particle size measurement device 12;
- initiating a measurement of size of feed particles in the animal feed;
- controlling the opening and closing of the automatically controllable doors, gates, or shutters 11c, 12c;
- receiving values of the measured size of feed particles in the animal feed from the feed particle size measurement device 12; and
- automatically controlling the feed mixer 11 based on the measured size of feed particles in the animal feed.

The control device 13 is provided for automatically controlling the mixing time the feed mixer 11 cuts and mixes the animal feed based on the measured size of feed particles in the animal feed.

Hereby, a system for mixing animal feed is obtained, by which feed cutting and mixing can be made in real time or near real time in order to feed animals with feed of appropriate size of feed particles at each instant. By the system the feeding costs can be reduced, the animal health can be improved, and the quantity and/or quality in milk production can be improved.

It shall be appreciated that the entire batch of animal feed that has been cut and mixed is emptied through the feed particle size measurement device 12, that is, through the doors, gates, or shutters 11c and 12c. Alternatively, another not illustrated opening of feed mixer 11 is used for this purpose.

It shall be appreciated that while the doors, gates, or shutters 11c and 12c are illustrated as being pivotally movable in a vertical plane, they may alternatively be movable differently, e.g. as sliding doors, gates, or shutters in a horizontal plane.

The feed mixing system of the present invention is fully automated. Furthermore, it may be an integral part of a feeding device, particularly a feed wagon or similar, provided for feeding animals with the animal feed. To this end the entire system may be movable along a rail 12 or similar, which is mounted in a wall or ceiling of a barn housing the animals to be fed.

In one version of the invention, the control device 13 collects historical data of measured size of feed particles in animal feed in connection with the mixing of the animal feed and controls the feed mixer 11 based on these historical data. For instance, depending on the feed ingredients and the measured size of feed particles historical data may indicate a suitable cutting and mixing time for the feed mixer 11.

Thus, the control device 13 can collect historical data of measured size of feed particles in animal feed according to a number of different recipes in connection with mixing of the animal feed and store the data for each of the different recipes. When animal feed of a selected recipe is to be mixed the selected recipe is entered into the system. The control device 13 receives the selected recipe and controls the feed mixer 11 while mixing the animal feed of the selected recipe based on the historical data of the measured size of feed particles in the animal feed of the selected recipe.

In another version, the feed particle size measurement device 12 is provided for repeatedly measuring the size of feed particles in the animal feed in connection with the mixing of the animal feed, and the control device 13 is provided for receiving values of the repeatedly measured size of feed particles in the animal feed and for automatically controlling the feed mixer 11 based on the repeatedly measured size of feed particles in the animal feed.

Next, with reference to Fig. 2, a feed particle size measurement device 12 as being comprised in a system for mixing animal feed will be described. The feed particle size measurement device 12 may for instance be implemented in the feed mixing system as illustrated in Fig. 1.

The feed particle size measurement device 12 is a particle separator provided for separating feed particles of different sizes and comprises from top to bottom an upper frame 21, an automatically movable sieve 21a, a lower frame 22, and an automatically movable door, gate, or shutter 22a. The automatically movable sieve 21a and door, gate, or shutter 22a may be moved horizontally as controlled by a control device such as e.g. the control device 13 of Fig. 1 to define a closed sampling state, in which animal feed is collected in the feed particle size measurement device 12, and an open emptying state, in which animal feed in the feed particle size measurement device 12 is emptied.

In the closed sampling state, animal feed of lower size will pass through the sieve 21a and be collected by the door, gate, or shutter 22a, whereas animal feed of larger size will be collected by the sieve 21a. In order to accelerate the sifting procedure, the feed particle size measurement device 12 may be provided with a shaking or vibration device 25 provided for shaking the feed particle size measurement device 12, preferably in horizontal directions. The shaking or vibration device 25 may e.g. comprise a shaking or vibrating table which is shaken by means of motor rotating an eccentric disk. Weighing devices 23, 24 are provided for measuring weights of animal feed as collected by the sieve 21a and the door, gate, or shutter 22a separately.

After weighing the sieve 21a the movable door, gate, or shutter 22a is moved to reach the open emptying state, and the animal feed is emptied from the feed particle size measurement device 12. Finally, the measured weight values, which are values of the size of feed particles in the animal feed, are transferred to the control device of the system for mixing animal feed, and the control device can automatically control the feed mixerbased on the measured weight values.

It shall be appreciated that the feed particle size measurement device 12 of Fig. 2 may comprise more frames and a plurality of sieves with differently sized holes (the sieves are arranged above one another in order depending on their hole size with the sieves with smallest holes at the bottom) and a plurality of weighing devices for separately weighing the animal feed collected by the respective sieve.

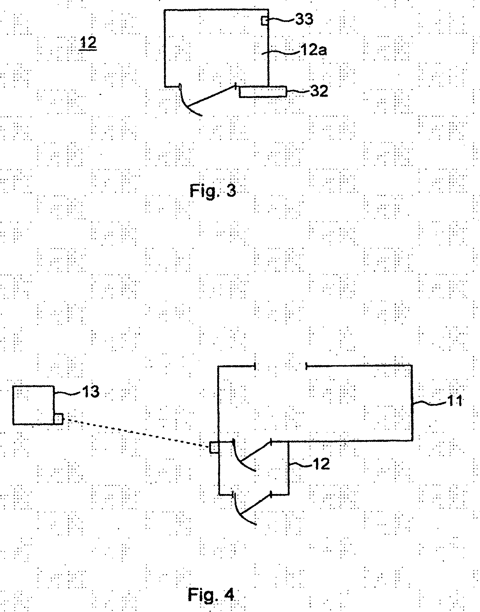

Next, with reference to Fig. 3, a feed particle size measurement device 12 as being comprised in a system for mixing animal feed according to the invention will be described. The feed particle size measurement device 12 may for instance be implemented in the feed mixing system as illustrated in Fig. 1.

The feed particle size measurement device 12 is a device for measuring density of the animal feed in connection with the mixing of the animal feed, wherein the density is a measure of the size of the feed particles. To this end, the feed particle size measurement device 12 comprises a weighing device 32 provided for measuring the weight of the animal feed in the chamber 12a of the feed particle size measurement device 12, and a volume measurement device such as e.g. a level indicator 33 (given that the cross sectional area of the chamber 12a is known) provided for measuring the volume of the animal feed in the chamber 12a of the feed particle size measurement device 12. The density is then calculated as the ratio of the weight and the volume. The measurement values are transferred to the control device of the system for mixing animal feed, and the control device can automatically control the feed mixer based on the measurement values.

If the volume of the chamber 12a of the feed particle size measurement device 12 is known, the chamber may be filled entirely with animal feed in a controlled manner, and the level indicator 33 may be dispensed with.

Turning back to Fig. 1, it shall be appreciated that the system for mixing feed also comprises a device 14 provided for measuring the moisture content of the animal feed and for indicating to a farmer or to the control device 13 if the moisture content is above a certain level.

It shall be appreciated that if the particle size measurement device 12 of Fig. 2 is used, the separation of animal feed may not operate appropriately if the moisture content is above a certain level. Further, the moisture content directly affects the density values obtained by using the particle size measurement device 12 of Fig. 3: the higher the moisture content is the higher density values will be obtained. Thus, the moisture content may be used in calculations to provide a density compensated for moisture which more accurately determines the size of feed particles of the animal feed.

In one version of the invention, the system for mixing animal feed comprises both the particle size measurement device of Fig. 2 and that of Fig. 3 integrated into a single device. If the particle size measurement device 12 of Fig. 2 is operated so that the sieve 21 is withdrawn from the frames 21 and 22 and the door, gate, or shutter 22a is inserted to close the bottom opening of frame 22, the frames 21 and 22, and the door, gate, or shutter 22a provides a chamber. The weighing device 24 is provided for measuring the weight of the animal feed collected in the chamber and a level indicator such as the level indicator of Fig. 3 or other means is provided for measuring the volume of the animal feed in the chamber to thereby provide the density of the feed.

Such combined device could be used in the following manner. Firstly, a measure of the particle size is provided by operating the particle size measurement device as has been disclosed with reference to Fig. 2, and thereafter a measure of the particle size is provided by operating the particle size measurement device as has been disclosed in the previous paragraph.

Alternatively, the operation may be affected by the moisture content as measured. If the moisture content of the animal feed is below a threshold value, a measure of the particle size is provided by operating the particle size measurement device as has been disclosed with reference to Fig. 2, and if the moisture content of the animal feed is above the threshold value, a measure of the particle size is provided by operating the particle size measurement device as a density measurement device, possibly followed by compensating the density value for the moisture content.

Finally, Fig. 4 discloses a system for mixing animal feed according to a still further embodiment of the invention. Here, the control device 13 is located separate, i.e. remote, from the feed mixer 11 and the feed particle size measurement device 12, whereas the feed mixer 11 and the feed particle size measurement device 12 are integrated into a single apparatus. The control device 13 is operatively connected to the feed mixer 11 and the feed particle size measurement device 12 via wire or wirelessly. In other respects the embodiment of Fig. 4 may be similar to the embodiment of Fig. 1 and comprise a feed particle size measurement device 12 as illustrated in any of Fig. 3.

The invention thus being described facilitates herd management, improves herd nutrition and health, optimizes feed utilization, and increases productivity in dairy farming.

## Claims

1. A system for mixing animal feed, **characterized in that** said system comprises:
- a feed mixer (11) for cutting and mixing said animal feed;
- a feed particle size measurement device (12) provided for measuring the size of feed particles in said animal feed in connection with the mixing of the animal feed; and
- a control device (13) provided for receiving values of said measured size of feed particles in said animal feed and for automatically controlling the feed mixer based on said measured size of feed particles in said animal feed, wherein
- said feed particle size measurement device is a device (32, 33) for measuring density of the animal feed in connection with the mixing of the animal feed, wherein said density is a measure of the size of the feed particles;
- the control device is provided for automatically controlling the mixing time during which the feed mixer cuts and mixes said animal feed based on said measured size of feed particles in said animal feed;
- said system comprises a feeding device provided for feeding animals with said animal feed; and
- said system is fully automated.

2. The system of claim 1 wherein the feeding device is a feed wagon.

3. The system of claim 1 or 2 wherein said feed particle size measurement device comprises a particle separator (21, 22) provided for separating feed particles of different sizes, and a weighing arrangement (23, 24) provided for weighing the separated feed particles.

4. The system of any of claims 1-3 wherein said feed particle size measurement device is provided as an integral part of said feed mixer (11).

5. The system of any of claims 1-3 wherein said control device (13) is located separate from said feed mixer and is operatively connected to said feed mixer via wire or wirelessly.

6. The system of any of claims 1-5 wherein said control device (13) is provided for
- collecting historical data of measured size of feed particles in animal feed in connection with the mixing of the animal feed; and
- controlling the feed mixer based on the historical data.

7. The system any of claims 1-5 wherein said control device (13) is provided for
- collecting historical data of measured size of feed particles in animal feed according to a number of different recipes in connection with mixing of the animal feed;
- receiving a selected recipe of animal feed to be mixed; and
- controlling the feed mixer while mixing the animal feed of the selected recipe based on the historical data of the measured size of feed particles in the animal feed of the selected recipe.

8. The system of any of claims 1-7 wherein
- said feed particle size measurement device (12) is provided for repeatedly measuring the size of feed particles in said animal feed in connection with the mixing of the animal feed; and
- said control device (13) is provided for receiving values of said repeatedly measured size of feed particles in said animal feed and for automatically controlling the feed mixer (11) based on said repeatedly measured size of feed particles in said animal feed.

9. A method for feeding animals, **characterized by** the steps of:
- cutting and mixing said animal feed by a feed mixer (11) of a system for mixing animal feed;
- measuring the size of feed particles in said animal feed in connection with the mixing of the animal feed by a feed particle size measurement device (12) arranged integrally with said feed mixer;
- transferring values of said measured size of feed particles in said animal feed from the feed particle size measurement device (12) to a controller (13);
- automatically controlling by the controller the cutting and mixing of said animal feed by the feed mixer based on said measured size of feed particles in said animal feed, wherein
- the density of the animal feed is measured in connection with the mixing of the animal feed by said feed particle size measurement device (32, 33), wherein said density is a measure of the size of the feed particles;
- the mixing time during which the feed mixer cuts and mixes said animal feed is automatically controlled by the controller based on said measured size of feed particles in said animal feed;
- animals are fed with the mixed animal feed by a feeding device of said system for mixing animal feed; and
- said method is fully automated.

10. The method of claim 9 wherein the animals are fed with the mixed animal by a feed wagon of said system for mixing animal feed.

11. The method of claim 9 or 10 wherein
- historical data of measured size of feed particles in animal feed according to a number of different recipes is collected in connection with mixing of the animal feed;
- a selected recipe of animal feed to be mixed is received by said controller; and
- the cutting and mixing of the animal feed of the selected recipe by the feed mixer is controlled by the controller based on the historical data of the measured size of feed particles in the animal feed of the selected recipe.

## Patentansprüche

1. System zum Mischen von Tierfutter, **dadurch gekennzeichnet, dass** das System umfasst:
- eine Futtermischeinrichtung (11) zum Schneiden und Mischen des Tierfutters;
- eine Futterteilchengrößen-Messvorrichtung (12), die zum Messen der Größe von Tierfutterteilchen in dem Tierfutter in Verbindung mit dem Mischen des Tierfutters vorgesehen ist; und
- eine Steuervorrichtung (13), die zum Empfangen von Werten der gemessenen Größe der Futterteilchen in dem Tierfutter und zum automatischen Steuern der Futtermischeinrichtung basierend auf der gemessenen Größe von Futterteilchen in dem Tierfutter vorgesehen ist, wobei
- die Futterteilchengrößen-Messvorrichtung eine Vorrichtung (32, 33) zum Messen der Dichte des Tierfutters in Verbindung mit dem Mischen des Tierfutters ist, wobei die Dichte eine Messung der Größe der Futterteilchen ist;
- die Steuervorrichtung zum automatischen Steuern der Mischzeit vorgesehen ist, während der die Futtermischeinrichtung das Tierfutter basierend auf der gemessenen Größe von Futterteilchen in dem Tierfutter schneidet und mischt;
- das System eine Füttervorrichtung umfasst, die zum Füttern von Tieren mit dem Tierfutter vorgesehen ist; und
- das System vollständig automatisiert ist.

2. System nach Anspruch 1, wobei die Füttervorrichtung ein Fütterwagen ist.

3. System nach Anspruch 1 oder 2, wobei die Futterteilchengrößen-Messvorrichtung einen Teilchenseparator (21, 22) umfasst, der zum Trennen der Futterteilchen unterschiedlicher Größe vorgesehen ist, und eine Wiegeanordnung (23, 24), die zum Wiegen der getrennten Futterteilchen vorgesehen ist.

4. System nach einem der Ansprüche 1 - 3, wobei die Futterteilchengrößen-Messvorrichtung als ein fester Bestandteil der Futtermischeinrichtung (11) vorgesehen ist.

5. System nach einem der Ansprüche 1 - 3, wobei sich die Steuervorrichtung (13) getrennt von der Futtermischeinrichtung befindet und betriebsfähig über einen Draht oder drahtlos an die Futtermischeinrichtung angeschlossen ist.

6. System nach einem der Ansprüche 1-5, wobei die Steuervorrichtung (13) vorgesehen ist zum
- Sammeln historischer Daten über die gemessene Größe der Futterteilchen im Tierfutter in Verbindung mit dem Mischen des Tierfutters; und
- Steuern der Futtermischeinrichtung, basierend auf den historischen Daten.

7. System nach einem der Ansprüche 1-5, wobei die Steuervorrichtung (13) vorgesehen ist zum
- Sammeln historischer Daten über die gemessene Größe von Futterteilchen im Tierfutter gemäß einer Anzahl unterschiedlicher Rezepte in Verbindung mit dem Mischen des Tierfutters;
- Empfangen eines ausgewählten Rezepts für zu mischendes Tierfutter; und
- Steuern der Futtermischeinrichtung, während des Mischens des Tierfutters des ausgewählten Rezepts, basierend auf den historischen Daten der gemessenen Größe der Futterteilchen im Tierfutter des ausgewählten Rezepts.

8. System nach einem der Ansprüche 1-7, wobei
- die Futterteilchengrößen-Messvorrichtung (12) vorgesehen ist, um die Größe der Futterteilchen in dem Tierfutter in Verbindung mit dem Mischen des Tierfutters wiederholt zu messen; und
- die Steuervorrichtung (13) vorgesehen ist, um Werte der wiederholt gemessenen Größe von Futterteilchen in dem Tierfutter zu erhalten und um die Futtermischeinrichtung (11) basierend auf der wiederholt gemessenen Größe der Futterteilchen in dem Tierfutter automatisch zu steuern.

9. Verfahren zum Füttern von Tieren, **gekennzeichnet durch** die nachfolgenden Schritte:
- Schneiden und Mischen des Tierfutters durch eine Futtermischeinrichtung (11) eines Systems zum Mischen von Tierfutter;
- Messen der Größe von Futterteilchen in dem Tierfutter in Verbindung mit dem Mischen des Tierfutters durch eine Futterteilchengrößen-Messvorrichtung (12), die als ein Bauteil mit der Futtermischeinrichtung angeordnet ist;
- Übertragen von Werten der gemessenen Größe von Futterteilchen in dem Tierfutter von der Futterteilchengrößen-Messvorrichtung (12) an eine Steuerung (13);
- Automatisches Steuern durch die Steuerung des Schneidens und des Mischens des Tierfutters durch die Futtermischeinrichtung, basierend auf der gemessenen Größe von Futterteilchen in dem Tierfutter, wobei
- die Dichte des Tierfutters in Verbindung mit dem Mischen des Tierfutters durch die Futterteilchengrößen-Messvorrichtung (32, 33) gemessen wird, wobei die Dichte eine Messung der Größe der Futterteilchen ist;
- die Mischzeit, während der die Futtermischeinrichtung das Tierfutter schneidet und mischt automatisch durch die Steuerung basierend auf der gemessenen Größe von Futterteilchen in dem Tierfutter gesteuert wird;
- Tiere mit dem gemischten Tierfutter durch eine Füttervorrichtung des Systems zum Mischen von Tierfutter gefüttert werden; und
- das Verfahren vollständig automatisiert ist.

10. Verfahren nach Anspruch 9, wobei die Tiere mit dem gemischten Tier durch einen Fütterwagen des Systems zum Mischen von Tierfutter gefüttert werden.

11. Verfahren nach Anspruch 9 oder 10, wobei
- historische Daten der gemessenen Größe der Futterteilchen in Tierfutter gemäß einer Anzahl unterschiedlicher Rezepte in Verbindung mit dem Mischen des Tierfutters gesammelt werden;
- ein ausgewähltes Rezept für zu mischendes Tierfutter von der Steuerung erhalten wird; und
- das Schneiden und Mischen des Tierfutters des ausgewählten Rezepts durch die Futtermischeinrichtung von der Steuerung basierend auf den historischen Daten der gemessenen Größe von Futterteilchen in dem Tierfutter des ausgewählten Rezepts gesteuert wird.

## Revendications

1. Système pour mélanger un aliment pour animaux, **caractérisé en ce que** ledit système comprend :
- un mélangeur d'aliment (11) pour couper et mélanger ledit aliment pour animaux ;
- un dispositif de mesure de la taille de particules alimentaires (12) fourni pour mesurer la taille de particules alimentaires dans ledit aliment pour animaux en connexion avec le mélange de l'aliment pour animaux ; et
- un dispositif de commande (13) fourni pour recevoir des valeurs de ladite taille mesurée de particules alimentaires dans ledit aliment pour animaux et pour commander automatiquement le mélangeur d'aliment sur la base de ladite taille mesurée de particules alimentaires dans ledit aliment pour animaux, dans lequel
- ledit dispositif de mesure de la taille de particules alimentaires est un dispositif (32, 33) pour mesurer la densité de l'aliment pour animaux en connexion avec le mélange de l'aliment pour animaux, dans lequel ladite densité est une mesure de la taille des particules alimentaires ;
- le dispositif de commande est fourni pour commander automatiquement la durée de mélange pendant laquelle le mélangeur d'aliment coupe et mélange ledit aliment pour animaux sur la base de ladite taille mesurée de particules alimentaires dans ledit aliment pour animaux ;
- ledit système comprend un dispositif d'alimentation fourni pour alimenter des animaux avec ledit aliment pour animaux ; et
- ledit système est complètement automatisé.

2. Système selon la revendication 1, dans lequel le dispositif d'alimentation est une remorque d'alimentation.

3. Système selon la revendication 1 ou 2, dans lequel ledit dispositif de mesure de la taille de particules alimentaires comprend un séparateur de particules (21, 22) fourni pour séparer des particules alimentaires de tailles différentes, et un agencement de pesage (23, 24) fourni pour peser les particules alimentaires séparées.

4. Système selon l'une quelconque des revendications 1-3, dans lequel ledit dispositif de mesure de la taille de particules alimentaires est fourni en tant que partie intégrante dudit mélangeur d'aliment (11).

5. Système selon l'une quelconque des revendications 1-3, dans lequel ledit dispositif de commande (13) est situé séparément dudit mélangeur d'aliment et est connecté de manière fonctionnelle audit mélangeur d'aliment par fil ou sans fil.

6. Système selon l'une quelconque des revendications 1-5, dans lequel ledit dispositif de commande (13) est fourni pour
- recueillir des données historiques de la taille mesurée de particules alimentaires dans un aliment pour animaux en connexion avec le mélange de l'aliment pour animaux ; et
- commander le mélangeur d'aliment sur la base des données historiques.

7. Système selon l'une quelconque des revendications 1-5, dans lequel ledit dispositif de commande (13) est fourni pour
- recueillir des données historiques de la taille mesurée de particules alimentaires dans un aliment pour animaux selon un nombre de recettes différentes en connexion avec le mélange de l'aliment pour animaux ;
- recevoir une recette sélectionnée d'aliment pour animaux à mélanger ; et
- commander le mélangeur d'aliment tout en mélangeant l'aliment pour animaux de la recette sélectionnée sur la base des données historiques de la taille mesurée de particules alimentaires dans l'aliment pour animaux de la recette sélectionnée.

8. Système selon l'une quelconque des revendications 1-7, dans lequel
- ledit dispositif de mesure de la taille de particules alimentaires (12) est fourni pour mesurer à plusieurs reprises la taille de particules alimentaires dans ledit aliment pour animaux en connexion avec le mélange de l'aliment pour animaux ; et
- ledit dispositif de commande (13) est fourni pour recevoir des valeurs de ladite taille mesurée à plusieurs reprises de particules alimentaires dans ledit aliment pour animaux et pour commander automatiquement le mélangeur d'aliment (11) sur la base de ladite taille mesurée à plusieurs reprises de particules alimentaires dans ledit aliment pour animaux.

9. Procédé pour alimenter des animaux, **caractérisé par** les étapes consistant à :
- couper et mélanger ledit aliment pour animaux par un mélangeur d'aliment (11) d'un système pour mélanger un aliment pour animaux ;
- mesurer la taille de particules alimentaires dans ledit aliment pour animaux en connexion avec le mélange de l'aliment pour animaux par un dispositif de mesure de la taille de particules alimentaires (12) agencé de manière intégrante avec ledit mélangeur d'aliment ;
- transférer des valeurs de ladite taille mesurée de particules alimentaires dans ledit aliment pour animaux du dispositif de mesure de la taille de particules alimentaires (12) à une unité de commande (13) ;
- commander automatiquement par l'unité de commande le coupage et le mélange par le mélangeur d'aliment dudit aliment pour animaux sur la base de ladite taille mesurée de particules alimentaires dans ledit aliment pour animaux ; dans lequel
- la densité de l'aliment pour animaux est mesurée en connexion avec le mélange de l'aliment pour animaux par ledit dispositif de mesure de la taille de particules alimentaires (32, 33), dans lequel ladite densité est une mesure de la taille des particules alimentaires ;
- la durée de mélange pendant laquelle le mélangeur d'aliment coupe et mélange ledit aliment pour animaux est commandée automatiquement sur la base de ladite taille mesurée de particules alimentaires dans ledit aliment pour animaux ;
- les animaux sont alimentés avec l'aliment pour animaux mélangé par un dispositif d'alimentation dudit système pour mélanger un aliment pour animaux ; et
- ledit procédé est complètement automatisé.

10. Procédé selon la revendication 9, dans lequel les animaux sont alimentés avec l'animal mélangé par une remorque d'alimentation dudit système pour mélanger un aliment pour animaux.

11. Procédé selon la revendication 9 ou 10, dans lequel
- des données historiques de la taille mesurée de particules alimentaires dans un aliment pour animaux selon un nombre de recettes différentes sont recueillies en connexion avec le mélange de l'aliment pour animaux ;
- une recette sélectionnée d'aliment pour animaux à mélanger est reçue par ladite unité de commande ; et
- le coupage et le mélange de l'aliment pour animaux de la recette sélectionnée par le mélangeur d'aliment est commandé par l'unité de commande sur la base des données historiques de la taille mesurée de particules alimentaires dans l'aliment pour animaux de la recette sélectionnée.
